# EUROPÄISCHE PATENTSCHRIFT

(11) **EP 0 887 166 B1**
(45) Veröffentlichungstag und Bekanntmachung des Hinweises auf die Patenterteilung: **14.04.2004**
(21) Anmeldenummer: 98111656.9
(22) Anmeldetag: 24.06.1998
(51) Int. Cl.: B29C 37/00, B29C 70/12

(54) **Verfahren zum Herstellen einer Verbindungsschicht**
Method for producing a bonding layer
Procédé pour produire une couche de liaison

(30) Priorität: 24.06.1997 DE 19726789
(43) Veröffentlichungstag der Anmeldung: 30.12.1998
(73) Patentinhaber: ERA BESCHICHTUNG GmbH & CO. KG, 31592 Stolzenau (DE)
(72) Erfinder: Noack, Kurt-Michael, 31592 Stolzenau (DE)
(74) Vertreter: Winkler, Andreas, Dr.

(56) Entgegenhaltungen:
- EP-A- 0 747 213
- WO-A-95/18710
- DE-A- 3 823 157
- US-A- 4 260 445
- US-A- 4 828 897

## Beschreibung

Die Erfindung betrifft ein Verfahren zum Herstellen eines geformten Verbundmaterials, bestehend aus einem ersten und einem zweiten Material, die im Bereich einer Kontaktfläche mittels einer Verbindungsschicht miteinander verbunden sind.

Gegenwärtig übliche Verfahren nutzen für eine derartige Verbindungsschicht speziell ausgelegte Gewirke. Die Verbindung ergibt sich durch eine mechanische Verankerung des Gewirks mit dem erstarrten thermoplastischen oder chemisch ausgehärteten Material des Trägers. Mit diesem bekannten Verfahren sind zahlreiche Nachteile verknüpft.

Der wesentlichste Nachteil besteht darin, daß durch die verfügbaren Gewirke eine Einschränkung der Dehnbarkeit und damit des Tiefziehverhaltens verknüpft ist. Diese Einschränkung wirkt sich besonders bei stark verformten Teilen sehr nachteilig aus. Außerdem ergibt sich durch den Aufwand zur Herstellung der Gewirke ein erheblicher Kostennachteil. Aufgrund der genannten Dehnungsanforderungen müssen zur Erstellung der Gewirke qualitativ hochwertige Fasern eingesetzt werden. Teilweise werden sogar Nachbearbeitungsverfahren erforderlich, bspw. Kräuseln, um die erforderliche Haftung zu erzielen.

Weiterhin ist aus der US 4,260,445 bekannt, verstärkte Kunststoffteile schichtweise herzustellen, wobei auf jede einzelne Schicht Fasern aufgestreut werden, während sich die jeweilige Schicht in einem noch nicht ausgehärteten Zustand befindet, worauf dann die Schicht ausgehärtet wird und die aufgestreuten Fasern mit einem Ende in die Schicht eingebunden werden und mit einem anderen Ende daraus vorstehen. Anschließend wird eine weitere Schicht aufgebracht und in entsprechender Weise vorgegangen.

Aus der US 3,900,651 ist ein hochbeanspruchbares sandwichartiges Verbundbauteil bekannt, das einen Schaumkern und zwei Außenschichten aufweist, wobei die Außenschichten elektrostatisch mit Fasern beflockt sind, deren freie Enden in dem Schaumkern eingebettet sind.

Schließlich ist aus der US 3,591,444 ein hochbeanspruchbares Schaumlaminat bekannt, das einen Schaumkern, einen Verstärkungseinsatz und eine Außenhaut aufweist. Der Verstärkungseinsatz enthält Fasern, die einerseits in einer Verstärkungsmatte und andererseits in dem Schaumkern eingebettet sind.

Die Aufgabe der Erfindung besteht darin, ein Verfahren zur Herstellung eines geformten Verbundmaterials anzugeben, bei dem eine feste Verankerung zweier Materialien gewährleistet ist und eine größere Dehnbarkeit der Verbindungsschicht und damit ein verbessertes Tiefziehverhalten der verbundenen Materialien erreicht wird.

Diese Aufgabe wird erfindungsgemäß durch ein Verfahren nach Anspruch 1 gelöst.

Überraschenderweise wurde gefunden, daß durch eine Beflockung eines der miteinander zu verbindenden Materialien mit Faserabschnitten eine Verbindungsschicht erzeugt werden kann, mit der die genannten Vorteile erzielt werden.

Die Verbindungsschicht aus Fasern beinhaltet keine Verfestigung in einer innerhalb der Verbindungsebene liegenden Richtung, wodurch uneingeschränkte Dehn- und Auszugsgrade des beflockten Flächengebildes erzielbar sind. Eine die Verbindung der Materialien bewirkende Haftung bzw. Festigkeit besteht ausschließlich senkrecht zur Verbindungsebene.

Bevorzugte Ausführungsformen der Erfindung sind in den Unteransprüchen beschrieben.

Das beflockte Material kann als Teil des verfahrens beflockt werden oder in Form eines fertig konfektionierten Materials verwendet werden.

Im Bereich der Kontaktfläche enthält ein Material eine erstarrungsfähige Schmelze bzw. thermoplastische Masse oder ein plastisches oder flüssiges chemisch aushärtbares Material, während das andere Material eine mit Fasern oder Garnabschnitten beflockte Schicht enthält.

Als Faserabschnitte können gerade Schnittfasern oder solche mit beliebiger Geometrie verwendet werden. Vorzugsweise weisen die Fasern eine rauhe Oberfläche oder auch eine Kräuselung auf, um eine möglichst gute Haftung bzw. Verankerung in den beiderseitigen Materialien zu bewirken.

Bevorzugt werden im wesentlichen gerade Fasern verwendet, die senkrecht zur Kontaktfläche orientiert sind.

Die Fasern können, wie bei einer Beflockung üblich, mit einem geeigneten elektrostatischen Feld senkrecht zur Materialschicht ausgerichtet werden. Dabei erfahren die Fasern eine Beschleunigung, die ein gutes Eindringen in die Faserhaftschicht ermöglicht. Die Faserhaftschicht wird vorher auf das zu beflockende Material aufgebracht und stellt üblicherweise eine Dispersion auf Acrylat- und/oder Polyurethanbasis dar.

In Erweiterung zu dem üblichen Beflockungsverfahren kann diese Faserschicht außerdem aus einer gelierbaren Masse (PVC-Plastisol), einem chemisch aushärtbaren Material oder einer erstarrungsfähigen Schmelze bzw. thermoplastischen Masse bestehen, wobei zu beachten ist, daß die Stabilität dieser Schicht unter den Verarbeitungsbedingungen gegeben ist; bei der Ausbildung der Kontaktschicht mit dem anderen Material dürfen keine Beeinträchtigungen der Haftung der Fasern in der Faserhaftschicht erfolgen.

Es kann vorgesehen sein, daß das erste Material ein Trägermaterial und das zweite Material ein Kaschiermaterial ist. In diesem Fall kann als erstes Material ein thermoplastisches Polypropylen-Tafelmaterial verwendet werden, das holzmehlgefüllt sein kann. Als zweites Material wird ein auf der Rückseite beflocktes Bahnenmaterial verwendet. Bei Anwendung von beflockter PVC-Kompakt- oder Schaumfolie entspricht die Vorgehensweise dem bekannten "Woodstock-Verfahren".

Umgekehrt kann vorgesehen sein, daß das zweite Material zum Trägermaterial generiert wird und das erste Material ein Kaschiermaterial ist, das eine mit Fasern beflockte Schicht enthält, wobei nach Art des Hinterspritzens das erste Material in ein Formwerkzeug zur Oberflächenkonturierung eingelagert wird und das zweite Material als z.B. reaktiv härtendes Polyurethan oder eine erstarrungsfähige Schmelze, z.B. Polypropylen, hinter der Beflockungsschicht des ersten Materials in das Formwerkzeug eingetragen wird. Der ausgebildete Druck führt wie üblich zur Oberflächenabformung mit dem Kaschiermaterial.

Wird als erstes Material eine beflockte PVC-Kompakt- oder Schaumfolie eingesetzt, entspricht dieses Verfahren dem in der Automobilindustrie üblichen Hinterspritzen zur Erstellung von Türteilen, Armaturentafeln oder sonstigen Innenraumteilen.

Als weitere Variante kann vorgesehen sein, daß der Träger oder das Trägermaterial beflockt wird und das Kaschiermaterial mit einem üblichen Tiefzieh- oder Tiefpressverfahren oder einem modifizierten Woodstockverfahren aufgebracht wird.

Dabei muß das Kaschiermaterial die erstarrungsfähige Schmelze bzw. thermoplastische Masse oder das chemisch aushärtbare Material im Bereich der Kontaktfläche enthalten.

Als Materialien sind hier ebenfalls kompakte oder geschäumte PVC- oder Polypropylenfolien geeignet.

Die Erfindung wird nachfolgend anhand eines Ausführungsbeispiels weiter erläutert.

Es sei die Anwendung des erfindungsgemäßen Verfahrens auf ein flexibles Flächengebilde betrachtet, das thermoplastisch verformbar ist.

Eine PVC-Schaumfolie mit einem Drei-Strich-Aufbau - Deckstrich und Schaumstriche - wird mit einem Klebstoff berakelt. Als Klebstoff können dispergierte Polyurethane oder Polyacrylate verwendet werden. In diese Klebstoffe werden über ein Schüttelsieb in der Länge definierte Faserabschnitte eingestreut. Zwischen Schüttelsieb und Schaumfolie wird ein elektrisches Feld angelegt. Durch die elektrostatische Wirkung richten sich die Fasern beim Fall senkrecht zur Beschichtungsebene - der Schaumfolie - aus. Gleichzeitig erfährt die Faser in diesem Feld eine Beschleunigung, so daß ein gutes Eindringen in das Klebermaterial erzielt wird. Die so beflockte Schaumfolie wird in einen Trockenkanal gefahren. Zur Trocknung werden Temperaturen von ca. 120°C angewendet. Dabei härtet die Kleberschicht vollständig aus. Nach Verlassen des Trockenkanals werden nicht eingebundene Fasern durch ein ausreichendes Vakuum abgesaugt. Das Verfahren entspricht insoweit einer Beflockung zur Oberflächengestaltung.

Als Fasern werden Polyamid-Kurzschnittfasern mit einer Länge von 1,5 mm eingesetzt. Die dadurch erhaltene beflockte Schaumfolie wird, wie in einem Woodstock-Verfahren üblich, verarbeitet. Unter Woodstock-Verfahren wird hierbei ein Verbindungsverfahren zur Kaschierung von Untergrundmaterialien verstanden, bei dem als Untergrundmaterial thermoplastisches, vorzugsweise Holzmehl-gefülltes Polypropylen-Tafelmaterial und als Kaschiermaterial PVC-Kunstleder in spezifischer Auslegung zum Einsatz kommt, wobei sich die Verbindung über Formschluß nach Einschmelzen des Gewirkes ergibt.

Bei teilweisem Eindringen können die Eigenschaften der Beflockungsschicht im verbleibenden Umfang erhalten bleiben. Von speziellem Interesse ist dabei die Verformbarkeit unter Druck, mit der die Funktion einer Schaumschicht zumindest teilweise übernommen werden kann.

Die beflockte Schaumfolie wird über ein Formwerkzeug gefahren und dabei durch geeignete Erwärmungseinrichtungen - z.B. Strahler, auf ein tiefziehfähige Temperatur gebracht. Eine Holzmehl-gefüllte Polypropylentafel wird auf die Verformungstemperatur von ca. 170°C erwärmt und über der beflockten Schaumfolie oberhalb des Werkzeugs angebracht. Durch einen Stempelhub in das Formwerkzeug wird der Materialverbund zwischen Schaumfolie und Träger erzielt. Dies erfolgt durch Einschmelzen der Faserteile des beflockten Materials in den thermoplastischen Träger. Die Eindringtiefe wird durch den Druck des Stempels gesteuert. Der beim Erkalten erhaltene Materialverbund weist gleiche Haftfestigkeiten zwischen Trägerteil und Flächengebilde auf, wie sie bei Anwendung bekannter Gewirkhaftschichten erzielt werden.

Als besonderer Vorteil ergibt sich, daß keine Rückstellkräfte auftreten, wie sie bei Anwendung von Gewirken üblich sind, die bei den anschließenden Tiefziehprozessen eine Dehnung erfahren. Damit ergeben sich besondere Vorteile hinsichtlich der Haftung an den Randbereichen des Trägers. Bei infolge geringer Dicke instabilen Trägermaterialien werden keine Rückstellkräfte aufgebaut, wie sie bei der Anwendung von Gewirken üblich sind. Damit können wesentlich bessere Dimensionsstabilitäten oder Maßgenauigkeiten des Materialverbundes erzielt werden.

Die in der vorangehenden Beschreibung, in der Zeichnung sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

## Patentansprüche

1. Verfahren zum Herstellen eines geformten Verbundmaterials, bestehend aus einem ersten und einem zweiten Material, die im Bereich einer Verbindungsebene mittels einer Verbindungsschicht miteinander verbunden sind, mit den Schritten:
- Beflocken des ersten Materials im Bereich der Verbindungsebene mit im wesentlichen geraden Faserabschnitten wie Schnittfasern oder Garnabschnitten, die senkrecht zur Verbindungsebene orientiert sind,
- Bereitstellen des zweiten Materials in einem zumindest im Bereich der Verbindungsebene plastischen oder flüssigen Zustand,
- Inkontaktbringen des zweiten Materials mit dem ersten Material und Einbetten der Faserabschnitte,
- Aushärten des zweiten Materials unter Einbindung der Faserabschnitte darin, wobei ein Verbundmaterial gebildet wird, und
- Ausziehen des Verbundmaterials im Tiefziehverfahren in einer innerhalb der Verbindungsebene liegenden Richtung.

2. Verfahren nach Anspruch 1, **dadurch gekennzeichnet, daß** das beflockte Material als fertig konfektioniertes Material bereitgestellt wird.

3. Verfahren nach Anspruch 1 oder 2, **dadurch gekennzeichnet, daß** das Erstarren der flüssigen oder plastischen Schicht durch Abkühlung oder chemische Härtung erfolgt.

4. Verfahren nach einem der vorangehenden Ansprüche, **dadurch gekennzeichnet, daß** Schnittfasern oder Garnabschnitte aus Endlosfilamenten oder Fibrillen bestehen, die bei den üblichen Herstellungsverfahren von Textil- oder technischen Fasern entstehen.

5. Verfahren nach einem der vorangehenden Ansprüche, **dadurch gekennzeichnet, daß** das erste und/oder zweite Material im Bereich der Kontaktfläche eine Dispersion auf Acrylatund/oder Polyurethanbasis aufweist.

6. Verfahren nach einem der vorangehenden Ansprüche, **dadurch gekennzeichnet, daß** als Faserabschnitte gerade Schnittfasern oder Fasern mit beliebiger Geometrie verwendet werden.

7. Verfahren nach einem der vorangehenden Ansprüche, **dadurch gekennzeichnet, daß** die Faserabschnitte im wesentlichen gleiche Länge aufweisen.

8. Verfahren nach einem der vorangehenden Ansprüche, **dadurch gekennzeichnet, daß** die Fasern eine rauhe Oberfläche aufweisen.

9. Verfahren nach einem der vorangehenden Ansprüche, **dadurch gekennzeichnet, daß** die Fasern eine Kräuselung aufweisen.

10. Verfahren nach einem der vorangehenden Ansprüche, **dadurch gekennzeichnet, daß** als Schnittfasern oder Garnabschnitte Gebilde aus Textilfasern und/oder technischen Fasern beliebiger chemischer Zusammensetzung eingesetzt werden.

11. Verfahren nach einem der vorangehenden Ansprüche, **dadurch gekennzeichnet, daß** die Schnittfasern oder Garnabschnitte aus Materialien wie Polyester, Polyamid, Polyacrylnitril, Polyacrylat, entsprechenden Mischpolymeren, Wolle, Baumwolle/-Wolle, Baumwolle oder Viskose bestehen.

12. Verfahren nach einem der vorangehenden Ansprüche, **dadurch gekennzeichnet, daß** als Schnittfasern oder Garnabschnitte Recyclingmaterialien verwendet werden.

13. Verfahren nach einem der vorangehenden Ansprüche, **dadurch gekennzeichnet, daß** im wesentlichen gerade Fasern in zur Kontaktfläche senkrechter Anordnung verwendet werden.

14. Verfahren nach einem der vorangehenden Ansprüche, **dadurch gekennzeichnet, daß** die Schnittfasern oder Garnabschnitte mittels eines elektrostatischen Feldes senkrecht auf dem zu beflockenden Material aufgebraucht werden.

15. Verfahren nach einem der vorangehenden Ansprüche, **dadurch gekennzeichnet, daß** die Schnittfasern oder Garnabschnitte auf dem zu beflockenden Material mit einer Polyurethan- oder Polyacrylatdispersion, mit einem gelierbaren PVC-Plastisol, einer erhärtenden Schmelze oder thermoplastischen Masse oder chemisch härtenden Masse so zur Anhaftung gebracht werden, daß eine ausreichende Stabilität bei der weiteren Verarbeitung gegeben ist.

16. Verfahren nach einem der vorangehenden Ansprüche, **dadurch gekennzeichnet, daß** ein Material ein Trägermaterial ist oder sich als Trägermaterial beim Verbindungsvorgang ausbildet, und das andere Materialien ein Kaschiermaterial ist.

17. Verfahren nach einem der vorangehenden Ansprüche, **dadurch gekennzeichnet, daß** das Kaschiermaterial oder das Trägermaterial beflockt wird.

18. Verfahren nach einem der vorangehenden Ansprüche, **dadurch gekennzeichnet, daß** ein beflocktes Kaschiermaterial eingesetzt wird, das mit einem thermoplastischen Tafelmaterial verpaßt wird, wobei gleichzeitig die Formgebung des Materialverbundes erfolgt.

19. Verfahren nach einem der vorangehenden Ansprüche, **dadurch gekennzeichnet, daß** ein beflocktes Kaschiermaterial in ein Werkzeug eingelegt wird und anschließend zur beflockten Seite ein härtendes Material in das Werkzeug hinterspritzt wird, wobei eine Konturausbildung durch den im Werkzeug entstehenden Druck erfolgt.

20. Verfahren nach einem der vorangehenden Ansprüche, **dadurch gekennzeichnet, daß** auf ein beflocktes Trägermaterial ein Kaschiermaterial mit üblichen Tiefzieh- oder Tiefpreßverfahren aufgebracht wird.

21. Verfahren nach einem der Ansprüche 17 bis 20, **dadurch gekennzeichnet, daß** als Kaschiermaterial Kompakt- oder Schaumfolien aus PVC oder Polyolefinen eingesetzt werden.

22. Verfahren nach einem der vorangehenden Ansprüche, **dadurch gekennzeichnet, daß** die aus der Beflockung bestehende Schicht nur teilweise in die Verbindungsschicht mit erstarrter Masse eingebunden ist und mit dem Bestandteil durch die verbleibende Druckverformbarkeit Materialeigenschaften darstellt, die einem Schaum entsprechen.

## Claims

1. A process for the production of a shaped composite material, consisting of a first material and a second material which are interconnected by a connecting layer in the region of a connecting plane, comprising the steps:
- flocking the first material in the region of the connecting plane with substantially straight fibre portions, such as cut fibres or yarn portions, oriented perpendicularly to the connecting plane,
- preparation of the second material in a state in which it is plastic or liquid at least in the region of the connecting plane,
- bringing the second material into contact with the first material and embedding the fibre portions,
- curing the second material with bonding of the fibre portions therein, a composite material being formed, and
- drawing out the composite material by the deep drawing method in a direction lying within the connecting plane.

2. A process according to claim 1, **characterised in that** the flocked material is prepared in the form of a ready-made material.

3. A process according to claim 1 or 2, **characterised in that** the solidification of the liquid or plastic layer is effected by cooling or chemical curing.

4. A process according to any one of the preceding claims, **characterised in that** cut fibres or yarn portions consist of endless filaments or fibrils which form in the conventional production processes of textile or industrial fibres.

5. A process according to any one of the preceding claims, **characterised in that** the first and/or second material has an acrylate and/or polyurethane based dispersion in the region of the contact surface.

6. A process according to any one of the preceding claims, **characterised in that** straight cut fibres or fibres of any arbitrary geometry are used as fibre portions.

7. A process according to any one of the preceding claims, **characterised in that** the fibre portions have substantially the same length.

8. A process according to any one of the preceding claims, **characterised in that** the fibres have a rough surface.

9. A process according to any one of the preceding claims, **characterised in that** the fibres have a curl.

10. A process according to any one of the preceding claims, **characterised in that** structures consisting of textile fibres and/or industrial fibres of any arbitrary chemical composition are used as cut fibres or yarn portions.

11. A process according to any one of the preceding claims, **characterised in that** the cut fibres or yarn portions consist of materials such as polyester, polyamide, polyacrylonitrile, polyacrylate, corresponding copolymers, wool, cotton/wool, cotton or viscose.

12. A process according to any one of the preceding claims, **characterised in that** recycling materials are used as cut fibres or yarn portions.

13. A process according to any one of the preceding claims, **characterised in that** substantially straight fibres are used in an arrangement perpendicular to the contact surface.

14. A process according to any one of the preceding claims, **characterised in that** the cut fibres or yarn portions are applied by an electrostatic field perpendicularly to the material for flocking.

15. A process according to any one of the preceding claims, **characterised in that** the cut fibres or yarn portions are made to adhere to the material for flocking by means of a polyurethane or polyacrylate dispersion, a PVC-plastisol adapted to form a gel, a setting melt or thermoplastic material or chemically curing material in such manner that adequate stability is obtained during further processing.

16. A process according to any one of the preceding claims, **characterised in that** one material is a carrier material or forms as a carrier material during the connecting operation, and the other material is a coating material.

17. A process according to any one of the preceding claims, **characterised in that** the coating material or the carrier material is flocked.

18. A process according to any one of the preceding claims, **characterised in that** a flocked coating material is used which is fitted with a thermoplastic panel material, shaping of the material bond being effected at the same time.

19. A process according to any one of the preceding claims, **characterised in that** a flocked coating material is placed in a tool and then a curing material is injected into the tool rearwardly relative to the flocked side, a contour formation being effected by the pressure occurring in the tool.

20. A process according to any one of the preceding claims, **characterised in that** a coating material is applied to a flocked carrier material by conventional deep-drawing or deep pressing methods.

21. A process according to any one of claims 17 to 20, **characterised in that** the coating material used is compact or foam sheets of PVC or polyolefins.

22. A process according to any one of the preceding claims, **characterised in that** the layer consisting of the flocking is bonded only partially into the connecting layer with solidified material and together with the component as a result of the residual pressure deformability represents material properties corresponding to a foam.

## Revendications

1. Procédé de fabrication d'un matériau composite formé, constitué d'un premier et d'un deuxième matériau, reliés ensemble dans la zone d'un plan de liaison, à l'aide d'une couche de liaison, présentant les étapes consistant à :
- Floquer le premier matériau dans la zone du plan de liaison avec des tronçons de fibres sensiblement rectilignes, telles que des fibres découpées ou des tronçons de fil, orienté(e)s perpendiculairement par rapport au plan de liaison,
- Préparer le deuxième matériau en un état plastique ou liquide, au moins dans la zone du plan de liaison,
- Mettre en contact le deuxième matériau avec le premier matériau, et noyer les tronçons de fibres,
- Faire durcir le deuxième matériau en y introduisant les tronçons de fibres, un matériau composite étant formé, et
- Étirer le matériau composite, en un procédé d'étirage profond, en une direction située dans le plan de liaison.

2. Procédé selon la revendication 1, **caractérisé en ce que** le matériau floqué est préparé sous forme de matériau dont la confection est achevée.

3. Procédé selon la revendication 1 ou 2, **caractérisé en ce que** la solidification de la couche liquide ou plastique se fait par refroidissement ou par durcissement chimique.

4. Procédé selon l'une des revendication précédentes, **caractérisé en ce que** des fibres découpées ou des tronçons de fil sont composé(e)s de filaments continus ou de fibrilles, produits lors des procédés de fabrication usuels de fibres textiles ou techniques.

5. Procédé selon l'une des revendications précédentes, **caractérisé en ce que** le premier et/ou le deuxième matériau présente, dans la zone de la face de contact, une dispersion à base d'acrylate et/ou de polyuréthane.

6. Procédé selon l'une des revendications précédentes, **caractérisé en ce que** l'on utilise comme tronçons de fibres des fibres découpées rectilignes, ou bien des fibres ayant une géométrie quelconque.

7. Procédé selon l'une des revendications précédentes, **caractérisé en ce que** les tronçons de fibres présentent une longueur sensiblement identique.

8. Procédé selon l'une des revendications précédentes, **caractérisé en ce que** les fibres présentent une surface rugueuse.

9. Procédé selon l'une des revendications précédentes, **caractérisé en ce que** les fibres présentent une frisure.

10. Procédé selon l'une des revendications précédentes, **caractérisé en ce que** l'on utilise comme fibres découpées ou comme tronçons de fibres des structures à base de fibres textiles et/ou de fibres techniques, d'une composition chimique quelconque.

11. Procédé selon l'une des revendications précédentes, **caractérisé en ce que** les fibres découpées ou les tronçons de fibres sont formé(e)s de matériaux, tels que du polyester, polyamide, polyacrylnitrile, polyacrylate, des polymères mélangés correspondants, de la laine, du coton/laine, du coton ou de la viscose.

12. Procédé selon l'une des revendications précédentes, **caractérisé en ce qu'**on utilise comme fibres découpées ou tronçons de fil des matériaux de recyclage.

13. Procédé selon l'une des revendications précédentes, **caractérisé en ce que** l'on utilise des fibres sensiblement rectilignes, placées en un agencement perpendiculaire par rapport à la surface de contact.

14. Procédé selon l'une des revendications précédentes, **caractérisé en ce que** les fibres découpées ou les tronçons de fil sont rendu(e)s rugueux à l'aide d'un champ électrostatique, appliqué perpendiculairement au matériau à floquer.

15. Procédé selon l'une des revendications précédentes, **caractérisé en ce que** les fibres découpées ou les tronçons de fil sont mis(es) en adhésion sur le matériau à floquer, avec une dispersion de polyuréthane ou de polyacrylate, avec un plastisol à base de PVC gélifiable, une masse fondue durcissante ou une masse thermoplastique, ou bien une masse durcissant chimiquement, de manière à fournir une stabilité suffisante lors de la suite du traitement.

16. Procédé selon l'une des revendications précédentes, **caractérisé en ce que** le premier matériau est un matériau support ou bien se formant en matériau support lors du processus de liaison, et l'autre matériau est un matériau de scellage.

17. Procédé selon l'une des revendications précédentes, **caractérisé en ce que** le matériau de scellage ou le matériau support est floqué.

18. Procédé selon l'une des revendications précédentes, **caractérisé en ce que** l'on utilise un matériau de scellage floqué, auquel est adjoint un matériau de formation de panneau thermoplastique, la conformation du composite de matériau étant effectuée simultanément.

19. Procédé selon l'une des revendications précédentes, **caractérisé en ce qu'**on insère dans un outil un matériau de scellage floqué, et l'on injecte ensuite dans l'outil, par l'arrière par rapport au côté floqué, un matériau durcissant, la formation d'un profil étant effectuée au moyen de la pression produite dans l'outil.

20. Procédé selon l'une des revendications précédentes, **caractérisé en ce que** l'on applique sur un matériau support floqué un matériau de scellage, en utilisant un procédé usuel d'étirage profond ou d'emboutissage profond.

21. Procédé selon l'une des revendications 17 à 20, **caractérisé en ce que** l'on utilise comme matériau de scellage des feuilles compactes ou des feuilles alvéolaires, en PVC ou en polyoléfines.

22. Procédé selon l'une des revendications précédentes, **caractérisé en ce que** la couche formée à partir du flocage n'est incorporée que partiellement dans la couche de liaison à masse solidifiée, et présente avec le composant, du fait de la déformabilité sous pression subsistante, des propriétés de matériau qui correspondent à celles d'une mousse.
